(19) Europäisches Patentamt / European Patent Office / Office européen des brevets

(11) EP 2 671 096 B1

(12) FASCICULE DE BREVET EUROPEEN

(45) Date de publication et mention de la délivrance du brevet:
18.03.2015 Bulletin 2015/12

(21) Numéro de dépôt: 12706651.2

(22) Date de dépôt: 30.01.2012

(51) Int Cl.:
*G01T 1/10* $^{(2006.01)}$

(86) Numéro de dépôt international:
PCT/FR2012/050193

(87) Numéro de publication internationale:
WO 2012/104533 (09.08.2012 Gazette 2012/32)

(54) **CHARGE SENSIBLE POUR DOSIMETRIE PASSIVE, DOSIMETRE COMPORTANT UNE TELLE CHARGE SENSIBLE ET SYSTEME DE LECTURE PAR ILLUMINATION D'UNE TELLE CHARGE SENSIBLE**

EMPFINDLICHE LADUNG FÜR PASSIVE DOSIMETRIE, DOSIMETER MIT EINER SOLCHEN EMPFINDLICHEN LADUNG UND LESESYSTEM DURCH BELEUCHTUNG EINER SOLCHEN EMPFINDLICHEN LADUNG

SENSITIVE CHARGE FOR PASSIVE DOSIMETRY, DOSIMETER COMPRISING SUCH A SENSITIVE CHARGE, AND READING SYSTEM BY ILLUMINATION OF SUCH A SENSITIVE CHARGE

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: 02.02.2011 FR 1150816

(43) Date de publication de la demande:
11.12.2013 Bulletin 2013/50

(73) Titulaire: **Commissariat à l'Énergie Atomique et aux Énergies Alternatives 75015 Paris (FR)**

(72) Inventeur: **NEGRE, Jean-Paul F-78830 Bonnelles (FR)**

(74) Mandataire: **Santarelli 49, avenue des Champs-Elysées 75008 Paris (FR)**

(56) Documents cités:
EP-A2- 0 499 350          WO-A2-2010/132569
DE-B- 1 029 947          US-A- 2 747 103
US-B1- 6 198 108

**Description**

**Domaine de l'invention**

L'invention concerne une charge sensible de dosimétrie passive, un dispositif de dosimétrie passive comportant une telle charge sensible et un lecteur adapté à lire une telle charge sensible.

Elle vise notamment la quantification des rayonnements de différentes natures (X, gamma, neutrons, protons, électrons...) dans les contrôles environnementaux, la radioprotection des personnes, la caractérisation des appareils émettant des rayonnements ionisants (sources radioactives, réacteurs nucléaires, générateurs X, accélérateurs de particules...), en radiodiagnostic ou en radiothérapie, ainsi que le contrôle de toute autre technique mettant en oeuvre des rayonnements ionisants.

Il est rappelé que, en matière de rayons ionisants, on utilise principalement deux unités de mesure, à savoir le Gray (Gy en abrégé) qui désigne la « dose absorbée » (c'est-à-dire l'énergie absorbée par une unité de masse de la matière cible), et le Sievert (Sv) qui désigne la « dose efficace » correspondante (on peut dire que la dose efficace correspond aux effets d'une dose absorbée donnée, en fonction de la nature du rayonnement et de la nature du matériau cible).

En fait, on utilise également la notion de Kerma (pour « Kinetic Energy Released per unit Mass », voire « Kinetic Energy Released in Matter »), qui représente la quantité d'énergie transférée à une unité de masse de matière par un rayonnement ionisant (par exemple l'énergie transférée, par unité de masse, par des photons incidents à des électrons secondaires mis en mouvement par ces photons). Le Kerma se mesure également en Gray.

On comprend aisément que le caractère passif d'un dosimètre permet d'en simplifier la structure, puisque celui-ci ne contient donc que des éléments passifs, notamment en ce qui concerne sa charge sensible ; quant à la notion de lecture différée, elle signifie que c'est de manière différée qu'on collecte les effets qu'a eu un rayonnement sur la charge sensible que comporte le dosimètre.

**Etat de la technique**

Une ancienne technique de dosimétrie passive à lecture différée met en oeuvre une charge sensible comportant des films argentiques (c'est-à-dire des émulsions photographiques) sur lesquels sont parfois plaquées des feuilles absorbantes en papier, en matière plastique ou en métal ; on utilise parfois l'expression de « dosi-film ». Leur mise en oeuvre est lourde et complexe, en étant à usage unique, tandis que leur réponse dépend de nombreux paramètres. Ces films ont un seuil de détection d'au moins 0.3 mGy et peuvent mesurer des doses allant jusqu'à 20 Gy. Ces films ne respectent donc pas les actuels besoins en matière de dosimétrie individuelle, puisque l'arrêté du 31 décembre 2004 a fixé (en France) le seuil de détection à 0.1 mSv (soit 0.1 mGy en rayonnements X et gamma).

Une autre technique, apparue dans les années 1950, met en oeuvre un dosimètre à charge sensible thermoluminescente (« thermoluminescent dosimeter » en anglais, ou TLD en abrégé) utilisant du fluorure de lithium dopé au magnésium (noté LiF:Mg, plus communément appelé « FLi »), de l'alumine, du fluorure de calcium activé au manganèse ($F_2Ca(Mn)$, notamment commercialisé sous l'appellation TLD400), du borate de lithium (notamment commercialisé sous l'appellation TLD800), de la fluorite naturelle... La lecture du TLD n'est possible qu'une fois, mais il est réutilisable ; il peut mesurer des doses cumulées comprises entre 10 $\mu$Gy et plusieurs Gy. Le document US-5 083 031 décrit un dosimètre personnel thermoluminescent utilisant le principe de filtres absorbants pour discriminer la nature du rayonnement ionisant incident. Le document US - 3 582 653 décrit un spectromètre X basé sur une alternance de capsules de FLi et d'écrans filtrants qui mesure des grandeurs proportionnelles à la dose absorbée derrière les écrans et en déduit, par traitement mathématique, le spectre du rayonnement incident.

Une autre technique met en oeuvre des dosimètres à charge sensible radio-photoluminescente (« radio-photoluminescent dosimeter » en anglais, soit

RPL en abrégé) qui se distinguent des TLD par le fait qu'ils utilisent certaines catégories de verres dopés, et que la recombinaison radiative des électrons piégés dans les centres de défauts, appelés les centres colorés, est provoquée par photo-stimulation dans l'UV, en pratique par laser (depuis les années 1980). Des dosimètres de ce type, fournis par l'IRSN (Institut de Radioprotection et de Sûreté Nucléaire) utilisent un verre dopé avec un composé argentique, et comportent trois couches superposées de verre et de filtres (plastique et métallique), ce qui permet de disposer de 15 plages de mesure en lecture analytique (5 en routine) et de fournir une indication sur la nature et l'énergie des rayonnements ionisants mis en jeu (de 10keV à 10 MeV, pour les photons). La lecture n'est pas destructive, ce qui permet plusieurs lectures d'une même charge sensible irradiée par une dose donnée, ou des mesures intermédiaires sur des longues périodes d'exposition au rayonnement en cause. En pratique, le seuil minimum de sensibilité est de 20 $\mu$Gy et la dose mesurée peut aller jusqu'à 10Gy.

Une autre technique met en oeuvre des dosimètres à luminescence optiquement stimulée (« Optically Stimulated Luminescence », soit OSL en abrégé), apparus à la fin des années 1990, dont l'élément actif de la charge sensible fait partie de la famille des matériaux radio-photo-luminescents ; il s'agit en pratique d'alumine dopée au carbone ($Al_2O_3$:C). Sous irradiation, les électrons sont piégés dans les centres de défaut du cristal formés par les atomes de carbone. A température ambiante, les charges peuvent rester piégées durant plusieurs jours ; la lecture de l'énergie cumulée est réalisée en temps différé par photo-stimulation au moyen d'un flash lumineux émettant dans le vert, l'intensité du pic de luminescence caractéristique dans le bleu étant proportionnelle à l'énergie cumulée. Ce dosimètre peut être réutilisé après réinitialisation, par chauffage ou par illumination optique. Sa plage de mesure est comprise entre 10 $\mu$Gy et 10 Gy. Le document US - 7 420 187 en décrit un exemple de mise en oeuvre en tant que dosimètre individuel.

Une autre technique, plus récente, est basée sur des matériaux radio-photo-luminescents, en particulier des fluoro-halogénures de baryum dopés à l'europium, de type (BaFBr : $Eu^{2+}$), utilisés dans la réalisation d'écrans souples radiographiques, communément appelés « écrans radio-luminescents à Mémoire » ou ERLM ; ces écrans sont aussi appelés « écrans photostimulables », voire « plaques au phosphore photostimulables ». En soi, les ERLM sont couramment utilisés, notamment pour la radiographie dans le domaine médical. Ils sont parfois associés à des écrans renforçateurs (voir l'article « Evaluation of a computed radiography system for megavolt photon beam dosimetry » de Olch et al, Med Phys 32(9), Sept 2005, 2987-2999). Le rapport signal/bruit et le seuil de détection d'un imageur à ERLM peuvent être améliorés en utilisant un empilement de plusieurs cellules constituées unitairement de couples « feuille métallique / ERLM » (voir, notamment, « Improvement of signal-to-noise and contrast-to-noise ratios in dual-screen computed radiography », de Shaw et al, Med. Phys. 24,1997, 1293-1302). Une cassette adaptée à recevoir un tel empilement de couples est décrite dans le document WO - 2009/030833. L'addition des images, provenant de la redondance de l'enregistrement radiographique sur les différentes cellules, permet d'augmenter le rapport signal sur bruit dans l'image résultante. Le niveau de signal obtenu est à peu près proportionnel au nombre **n** d'écrans utilisés tandis que le niveau de bruit est proportionnel à une racine carrée de ce nombre d'écrans (cf « La mesure en détonique ; R&D en radiographie éclair AIRIX », de Abraham et al, revue Chocs n°38 du CEA-DAM, pp18-28 (2010)). Toutefois l'application de cette technique est de mise en oeuvre compliquée car les ERLM doivent être positionnés soigneusement les uns sur les autres, avec éventuellement des écrans intercalés ; ils doivent ensuite être scannés l'un après l'autre ; enfin les images doivent être recalées spatialement les unes par rapport aux autres sans faire d'erreur. Toutes ces manipulations sont longues, difficilement automatisables et induisent des risques d'erreur importants ; de ce fait, cette technique n'est actuellement utilisée que très ponctuellement par des laboratoires de recherche et n'a pas donné lieu à des applications industrielles.

Bien que les ERLM, les RPL et les OSL ont en commun de mettre en oeuvre des matériaux radio-photo-luminescents, ils se distinguent par le fait que celui des ERLM est souple et qu'il peut être fabriqué sous forme d'une couche ultra fine (typiquement de l'ordre de 100 $\mu$m) pouvant être déposé ou collé sur un support quelconque, notamment plastique ou papier...

Aucun des dosimètres existants (TLD, OSL, RPL ou ERLM) ne répond à tous les besoins actuels.

Ainsi, pour des faisceaux de photons d'énergie supérieure au MeV, une quantification fiable de la dose impose de les placer à l'équilibre électronique, c'est-à-dire dans un matériau fantôme de densité et d'épaisseur parfaitement adaptées au spectre en énergie du rayonnement ; celui-ci doit donc être connu, ce qui n'est généralement pas le cas.. En outre, leur seuil de sensibilité reste trop élevé pour mesurer rapidement la dose correspondant aux environnements naturels. Il faut donc souvent plusieurs jours d'exposition pour obtenir des mesures satisfaisantes, ce qui peut être très pénalisant en situation de crise en cas de suspicion de contamination radiologique par exemple ; de plus, cela oblige à multiplier les opérations d'intervention sur le terrain pour mettre en place les dosimètres pour revenir les relever. La limite de dose pour le « public » est typiquement de 0.5 $\mu$Sv/h (80 $\mu$Sv/mois sur une base de 2000h/an de fonctionnement moyen de l'installation). Il faut donc faire tourner l'installation durant plusieurs heures pour dépasser les seuils de détection d'un dosimètre dans le cadre d'un contrôle, et donc savoir s'il y a eu un dépassement de dose normale.

Par ailleurs, l'obtention d'une mesure précise de la qualité du rayonnement (énergie des particules et dose en Kerma) est difficile. Cela nécessite la mise en place d'un ensemble de dosimètres accolés les uns aux autres ou placés les uns derrière les autres avec différentes épaisseurs de matériaux intercalés pour filtrer les rayonnements et atteindre un équilibre électronique. Le repérage de la position de chaque dosimètre et l'analyse des résultats est fastidieuse et susceptible d'erreur lors des manipulations (voir notamment l'article « Reconstruction of high-energy bremsstrahlung spectra by numerical analysis of depth-dose data » de Otto Sauer et al, Radiotherapy and Oncology, Vol 18, Issue 1, May 1990, pp39-47, ou l'article « Reconstruction of 6 MV photon spectra from measured transmission including maximum energy estimation » de Colin R Baker et al, Phys Med Biol 42, pp 2041-2051 (1997, ou l'article « Robust megavoltage X-ray spectra estimation from transmission measurements » de Marian Manciu et al, Journal of X-ray Science and Technology, 17 pp 85-99 (2009)).

WO 2010/132569 décrit une charge sensible selon le préambule de la revendication 1.

Concernant les lecteurs d'ERLM, le marché propose des systèmes numériseurs d'image (lecture 2D des écrans par laser) sophistiqués. Ces systèmes sont tous composés d'éléments optiques et optoélectroniques finement réglés et de composants électroniques permettant la numérisation d'images de relativement grandes dimensions par rapport à celles d'un ERLM composant le dosimètre. Ces systèmes sont donc difficilement transportables pour s'adapter au terrain et surdimensionnés et onéreux si l'utilisateur se cantonne uniquement à l'usage des dosimètres.

**Présentation de l'invention**

L'invention vise une charge sensible pour dosimètre passif dont la structure, compacte, rend son utilisation facile, mettant en oeuvre un empilement d'ERLM, et dont le seuil de détection est très bas, inférieur à celui des dosimètres existants, sans nécessiter la présence d'un matériau fantôme adapté au rayonnement ionisant (en ayant donc une fonction de dosimètre 3D), tout en étant capable de discriminer facilement la nature et l'énergie de ce rayonnement et d'accéder à la détermination de son spectre (en ayant donc une fonction spectromètre), et en ayant avantageusement des dimensions autorisant l'usage de lecteurs plus simples que les lecteurs existants.

L'invention propose à cet effet une charge sensible pour dosimètre passif comportant une pluralité d'écrans souples photostimulables adaptés à être empilés au sein d'un boîtier de dosimètre et comportant chacun une couche radiosensible en matériau radio-photo-luminescent dont la lecture peut ainsi être effectuée en différé par illumination, ces écrans étant solidaires d'un support pliable à deux configurations, à savoir une configuration repliée de détection, dans laquelle ces écrans sont empilés les uns sur les autres et une configuration dépliée de lecture, dans laquelle ces écrans sont disposés les uns à côté des autres sur une même face du support.

De manière préférée, les écrans sont réalisés en fluoro-halogénure de baryum dopés à l'europium, de préférence de type $BaF(Br,I) :Eu^{2+}$. Toutefois d'autres matériaux radio-photo-luminescents peuvent être utilisés, en particulier mais pas uniquement, d'autres fluoro-halogénures de type $BaFX :Eu^{2+}$ où X est un halogène, tels que $BaFBr :Eu^{2\pm}$, $BaFI :Eu^{2+}$, $BaFCl :Eu^{2+}$...

Ainsi que cela sera commenté plus loin, les écrans peuvent être empilés dans le boîtier de dosimètre en alternance avec des feuilles intercalaires à effet renforçateur et/ou absorbant et/ou filtrant (ces notions ayant en pratique des significations très proches).

En configuration de détection, les écrans sont disposés perpendiculairement à un rayonnement à caractériser.

Ainsi, un positionnement précis des écrans les uns sur les autres, en configuration repliée, est aisément obtenu, dès lors que ces écrans sont positionnés de manière précise sur le support, par rapport aux plis du support, et que ces plis du support sont définis de manière précise les uns par rapport aux autres. Par ailleurs, ces écrans étant solidaires du support, leurs épaisseurs respectives peuvent être définies de manière très précise, en fonction de la technique de fixation choisie, par exemple par dépôt ; ils peuvent aussi être fixés par collage. On comprend que le montage de l'empilement dans un boîtier se fait sans difficulté particulière tout en garantissant un positionnement relatif précis des écrans ; quant à la lecture, elle peut se faire après un simple dépliage du support et par illumination successive de chacun des écrans, par exemple en une seule passe, de manière donc simple et rapide, sans risque d'erreur quant à l'ordre des écrans lus, puisqu'ils sont encore, au moment de la lecture, solidaires du support.

Le principe de dosimètres comportant des bandes pliées est en soi connu, mais dans des contextes et avec des principes de dosimétrie très différents de ceux de l'invention.

Ainsi, le document US - 2 689 307 (Fairbank) a proposé, dans les années 1950, un dispositif capable de stocker et de traiter un dosimètre formé d'une enveloppe contenant une couche sensible, un couche de transfert et une poche contenant un liquide capable de provoquer le transfert de l'image formée sur la couche sensible sur la couche de transfert ; le développement de l'image par transfert implique une rupture de la poche contenant le liquide, ce qui se fait par passage forcé de l'enveloppe entre deux éléments plaqués l'un vers l'autre. Il est mentionné la possibilité de traiter une pluralité de dosimètres élémentaires porté par un même support plié en accordéon. Toutefois, il s'agit d'un type de dosimétrie très différent de celui de l'invention, sans lecture différée par illumination ; d'autre part, rien ne précise que ces dosimètres élémentaires seraient impressionnés en configuration superposée, d'autant qu'il est prévu de séparer chaque dosimètre individuel après la rupture forcée de sa poche de liquide, ce qui signifie que ces dosimètres sont considérés indépendamment les uns des autres, notamment au moment de la lecture de leurs images respectives (bien après la rupture forcée de la poche de liquide). Ce document ne décrit donc ni ne suggère un empilement d'éléments sensibles qui est soumis à un rayonnement à l'état empilé, avec interposition de feuilles intercalaires, mais qui peut faire l'objet d'une lecture différée après dépliage, sans rupture au niveau de ces plis.

Par ailleurs, le document US - 5 731 589 (Sief et al) a décrit un dosimètre de rayonnement UV, dans lequel deux éléments sont superposés par pliage, à savoir un biofilm et une feuille de protection. Toutefois, ce biofilm est plié en sorte de présenter deux portions ayant deux rôles différents, dont une portion de calibration qui est prise en sandwich entre les deux parties de la feuille de protection ; il est à préciser que le biofilm est formé de microorganismes fixés. Il s'agit donc d'un type de dosimétrie différent de celui de l'invention ; en tout état de cause, ce document ne décrit ni ne suggère un empilement d'éléments sensibles qui peut faire l'objet d'une lecture différée après dépliage.

Quant au document US - 6 198 108 (Schweitzer et al), il décrit un badge individuel de dosimétrie, formé par pliage d'une bande à trois zones séparées par des lignes de pliage ; en configuration de service, une zone extrême est prise en sandwich entre les deux autres zones, seule cette zone extrême comportant un élément radiosensible. Il n'y a donc pas d'empilement d'éléments sensibles. Ce document ne décrit ni ne suggère un empilement d'éléments sensibles qui peut faire l'objet d'une lecture différée après dépliage.

Au sein d'un dosimètre passif contenant une charge sensible du type précité, c'est-à-dire formée d'un support pliable portant une pluralité d'écrans photostimulables, des feuilles intercalaires sont avantageusement intercalées entre ces écrans en configuration repliée du support de ces écrans, en ayant pour fonction d'augmenter le pouvoir d'arrêt (fonction d'absorption) du dosimètre vis-à-vis des rayonnements à mesurer et renforcer (fonction de renforcement) ainsi le signal enregistré par les écrans ERLM. Le nombre d'ERLM et de feuilles utilisé permet, par absorption du rayonnement, d'atteindre et dépasser sans étude préalable l'équilibre électronique dans l'un des ERLM et ceux qui suivent avec des rayonnements énergétiques, d'extrapoler finement les doses mesurées à la dose dans l'air ou à la nature et l'énergie efficace du rayonnement incident, et enfin d'améliorer le rapport signal à bruit de la mesure, et donc le seuil de détection, grâce à la fusion des enregistrements (c'est-à-dire des images lues) des ERLM successifs. Typiquement, le dosimètre comporte de 5 à 20 écrans photostimulables ERLM.

Il est à noter que le fait que tous les écrans soient disposés sur une même face du support ne provoque qu'une faible différence d'écartement entre deux écrans successifs, selon qu'ils sont face à face (de part et d'autre d'une feuille intercalaire) ou dos à dos, puisque, dans le premier cas, l'écartement ne correspond qu'à l'épaisseur de la feuille prise en sandwich, tandis que, dans le second cas, l'écartement tient compte en outre de deux fois l'épaisseur du support. On peut toutefois négliger cette différence, dès lors qu'on choisit un support d'épaisseur suffisamment faible.

Toutefois, de manière avantageuse, cette différence d'écartement devient nulle dès lors que les écrans sont disposés avec deux plis entre les écrans successifs, ce qui signifie que les écrans sont, dans l'empilement, tous disposés en étant orientés dans une même direction.

En ce qui concerne les feuilles intercalaires, elles peuvent aussi être solidarisées au support, par exemple intercalées avec les écrans photostimulables, en étant, comme ces écrans, formés par dépôt ou par collage. Dans un tel cas d'alternance, les écrans sont séparés par deux plis les uns des autres, ce qui garantit un même écartement entre deux écrans successifs.

En variante, ces feuilles intercalaires peuvent être formées sur la face du support qui est opposée à celle portant les écrans. Selon encore une autre variante, ils peuvent être indépendants du support pliable, en étant intercalés entre les plis de ce support, au moment de l'exposition à un rayonnement à caractériser ; le cas échéant, ces feuilles peuvent être elles-mêmes solidaires d'un autre support, pliable ou non.

Le support pliable sur lequel les écrans (voire les feuilles intercalaires, si elles sont solidaires de ce support) sont fixés peut être une bande rectiligne (c'est-à-dire globalement rectangulaire), avec des lignes de pliage qui sont parallèles. En variante, ce support peut être un arc de cercle, avec des lignes de pliage qui passent par le centre de cet arc de cercle. Le support peut aussi avoir une combinaison de telles formes.

Quelque soit la forme de ce support pliable, les lignes de pliage sont avantageusement équidistantes. En variante, ces lignes de pliage ont des écartements qui diminuent ou diminuent de manière régulière de manière à ce que les écrans soient exactement superposés, mais en ayant des dimensions, entre lignes de pliage, qui sont de plus en plus courtes, ou au contraire de plus en plus longues.

En général, la dimension de chaque plaque (écran ou feuille intercalaire) correspond à une surface de l'ordre de quelques cm$^2$. Cette surface peut être adaptée en fonction de l'application visée. Il est aussi possible d'utiliser l'information bidimensionnelle de chaque écran afin de déterminer les variations spatiales de la dose de rayonnement dans les différents plans de détection et donc dans la profondeur du dosimètre. On comprend aisément que, dans ce cas, le dosimètre devient un imageur dosimétrique 3D.

Le support est réalisé dans un matériau d'épaisseur et d'absorption avantageusement faibles pour permettre d'étendre la mesure aux rayonnements de basses énergies, tout en supportant des pliages et des dépliages successifs. Il est rappelé que des écrans photostimulables peuvent être réinitialisés par illumination, ce qui signifie qu'un même empilement d'écrans (et de feuilles) peut être utilisé pour des utilisations successives. Du papier à haute résistance mécanique ou des films plastiques sont bien adaptés. La fine couche radiosensible des écrans photostimulables ou ERLM élémentaires de grandes dimensions disponibles dans le commerce est classiquement déposée sur un support plastique (du polyéthylène téréphtalate ou PET, par exemple) ; un tel support plastique peut être utilisé selon l'invention en y déposant directement et de manière locale les couches radiosensibles correspondant aux écrans juxtaposés, en laissant avantageusement, s'il y a lieu, un espace suffisant entre les écrans successifs pour y placer ensuite les feuilles intercalaires (renforçatrices/absorbantes).

Ces feuilles intercalaires renforçatrices/absorbantes peuvent être réalisées en différents matériaux absorbant les rayonnements, d'une manière telle que leur interaction avec les rayonnements soit suffisamment élevée pour les atténuer et créer par la même occasion des gerbes de particules qui seront facilement stoppées par les écrans photostimulables suivants (par rapport à la direction de pénétration du rayonnement). Pour la dosimétrie X ou Gamma, d'énergie supérieure à de l'ordre de 300 keV, on utilise avantageusement des matériaux métalliques tel que le tantale, le cuivre ou le plomb. Le tantale, de densité élevée est bien adapté à cette gamme d'énergie car il présente un pouvoir d'arrêt important pour une faible épaisseur, donc sans induire en soi une épaisseur importante pour le dosimètre. On comprend que l'épaisseur des feuilles intercalaires dépend en fait de la gamme d'énergies des rayonnements à mesurer. Dans le cas du tantale, et d'un rayonnement X monochromatique d'énergie inférieure à 10 MeV, les feuilles peuvent avoir une épaisseur comprise entre 100 et 500 µm. Pour des énergies supérieures, les épaisseurs de tantale peuvent être de plusieurs millimètres. Par contre, pour des énergies inférieures à 300 keV, aucune feuille métallique n'est nécessaire ; dans un tel cas, les feuilles intercalaires peuvent n'être constituées que par le support lui-même (avec donc un très faible pouvoir d'absorption/renforcement) ; en d'autres termes, il peut n'y avoir, dans une charge sensible, pas d'autres couches que des écrans et des portions de support.

Pour la dosimétrie d'autres rayonnements (neutrons, protons, électrons...), le matériau des feuilles intercalaires peut être choisi en sorte d'assurer une atténuation calibrée vis-à-vis des rayonnements envisagés et d'optimiser l'absorption de l'énergie des particules dans l'épaisseur des écrans ERLM. Pour la mesure des neutrons, on pourra par exemple utiliser des ERLM au gadolinium (par exemple disponibles sous la référence BAS-NB de Fujifilm®) en combinaison avec des feuilles intercalaires en matériau hydrogéné ou des ERLM standard ou au gadolinium associés à des feuilles en cadmium ou en gadolinium.

Dans le cas de rayonnements mixtes, l'utilisation de deux charges sensibles au sein d'un même boîtier, (voire l'utilisation de deux dosimètres), respectivement adaptées à des rayonnements différents (par exemple une charge sensible adaptée aux X/Gamma et l'autre adaptée aux neutrons), ou bien d'une charge sensible constituée d'un panachage des deux types de couples d'écrans/feuilles, peut permettre d'évaluer la contribution relative de chaque type de rayonnement. En effet, les divers écrans d'une même charge sensible, ou d'une pluralité de charges sensibles au sein d'un dosimètre, et toutes les feuilles intercalaires de ce même dosimètre peuvent être de plusieurs types. Il peut bien sûr y avoir un nombre quelconque de charges sensibles superposées, réparties en un même dosimètre ou en plusieurs dosimètres, pour caractériser un rayonnement.

Lorsque des feuilles plus épaisses semblent être nécessaires, ces feuilles peuvent être indépendantes du support portant les écrans. Cela permet la lecture des écrans ERLM dans des appareils de lecture du commerce car l'espace entre le système de convoyage des écrans et le guide de lumière est typiquement de l'ordre de 2 mm, ce qui permet une lecture aisée d'écrans sans avoir à tenir compte d'une épaisseur éventuellement supérieure des feuilles intercalaires. A titre d'exemple, une fois plié, le support muni des divers écrans a la forme d'un peigne ; on peut prévoir que les feuilles intercalaires soient liées les unes aux autres par un même côté latéral, en sorte de former également un peigne ; la formation du dosimètre implique alors simplement l'imbrication des deux peignes. Une telle configuration permet la formation de dosimètres comportant des feuilles intercalaires ayant des épaisseurs individuelles comprises entre quelques millimètres et quelques centimètres.

L'invention propose également un dosimètre comportant au moins une charge sensible du type précité.

L'invention propose un procédé de lecture par illumination d'une telle charge sensible, comportant un élément porteur pour le support en configuration dépliée de la charge sensible, une source d'illumination, et un capteur de lecture adapté à capter la réponse d'un écran soumis à l'action de la source d'illumination, l'élément porteur amenant successivement les écrans solidaires du support déplié dans la zone d'action de la source d'illumination et du capteur de lecture.

Comme indiqué ci-dessus, les écrans étant solidarisés à un support pliable, les positionnements relatifs entre ces écrans sont connus avec précision et sont en principe toujours les mêmes ; il en est de même avec les feuilles intercalaires, surtout lorsque ces dernières sont elles aussi portées par le support pliable. Une correspondance simple, en tout cas connue, existe ainsi entre la position d'un écran dans la configuration compacte d'exposition à un rayonnement et sa position dans la configuration dépliée ; cela permet d'associer facilement et sans ambiguïté les pixels des divers écrans ayant reçu le même rayonnement lors de l'exposition. Les manipulations fastidieuses des empilements connus sont ainsi évitées. En outre, la lecture et la réinitialisation par illumination de chaque ERLM peut se faire en une seule passe (en tout cas en un faible nombre de passes), sans risque de modifier l'ordre des écrans par rapport à la configuration de soumission au rayonnement. Il en découle un gain en fiabilité, en reproductibilité, en durée et en facilité d'exploitation.

Le recalage des enregistrements numériques respectifs des divers écrans successifs peut être facilement automatisé, car le dosimètre, en position déployée, a une configuration relative des écrans qui peut être précisément connue à partir de celle existant dans la configuration empilée ; en outre, cette géométrie est constante d'une mesure à l'autre. Pour faciliter l'analyse des enregistrements, il est possible de prévoir un marquage d'un écran extrême, par exemple le premier écran qui, dans l'empilement, est traversé par le rayonnement ; il est alors facile ensuite, en phase de lecture, de l'identifier immédiatement (le logiciel peut être conçu pour repérer cette marque et, si besoin, retourner l'image de 180°). Ce marquage peut être obtenu par une simple encoche dans un coin de l'écran considéré. Un logiciel peut réaliser automatiquement et en routine toutes les tâches d'exploitation et d'analyse telles que l'empilement numérique (ou fusion des enregistrements), fournir une représentation graphique 3D des dépôts d'énergie dans l'ensemble des ERLM et, en conséquence, le tracé de la courbe de dépôt de l'énergie du rayonnement au cours de sa progression dans l'épaisseur du dosimètre et la détermination de l'énergie efficace ou du spectre du rayonnement, l'extrapolation de la courbe de dépôt d'énergie à la dose dans l'air, la prise en compte des fonctions de réponse spectrale pour la conversion en Kerma dans l'air, etc.

## Liste des figures et description

Des objets, caractéristiques et avantages de l'invention ressortent de la description qui suit, donnée en regard des dessins annexés sur lesquels :

- la figure 1 est une vue schématique d'une charge sensible de dosimètre passif conforme à l'invention, en configuration plane,
- la figure 2 en est une vue en cours de pliage en accordéon,
- la figure 3 en est une vue en configuration d'empilement, au sein d'un boîtier pour constituer un dosimètre passif,
- la figure 4 est une vue schématique d'une autre charge sensible de dosimètre passif conforme à l'invention, en cours de pliage en accordéon,
- la figure 5 est une vue schématique d'une autre charge sensible de dosimètre passif, en configuration plane,
- la figure 6 est une vue en cours de pliage en accordéon de la charge sensible de la figure 5,
- la figure 7 en est une vue en perspective, en configuration d'empilement en combinaison avec un empilement de feuilles intercalaires,
- la figure 8 est une vue de dessus d'une autre charge sensible de dosimètre passif, conformée en arc de cercle,
- la figure 9 est un schéma de principe d'un système de lecture d'une charge sensible conforme à l'exemple des figures 1 à 7, notamment,
- la figure 10 est un schéma de principe d'un autre système de lecture d'une charge sensible conforme à l'exemple de la figure 8,
- la figure 11 est un schéma de principe d'un autre système de lecture d'une charge sensible conforme à cet exemple de la figure 8,
- la figure 12 est un graphe montrant une courbe typique de dépôt d'énergie dans l'épaisseur d'un dosimètre exposé à un rayonnement X ou un faisceau d'électrons, corrélant l'énergie transférée (en Kerma) ou absorbée (dose) à la profondeur dans le matériau considéré
- la figure 13 est un graphe montrant des courbes typiques de dépôt d'énergie dans l'épaisseur d'un matériau en fonction de la nature et l'énergie du rayonnement ionisant, et
- la figure 14 est un graphe montrant les images et un profil horizontal lus à partir de trois charges sensibles, empilées et soumises à un rayonnement donné (ici un faisceau d'électrons).

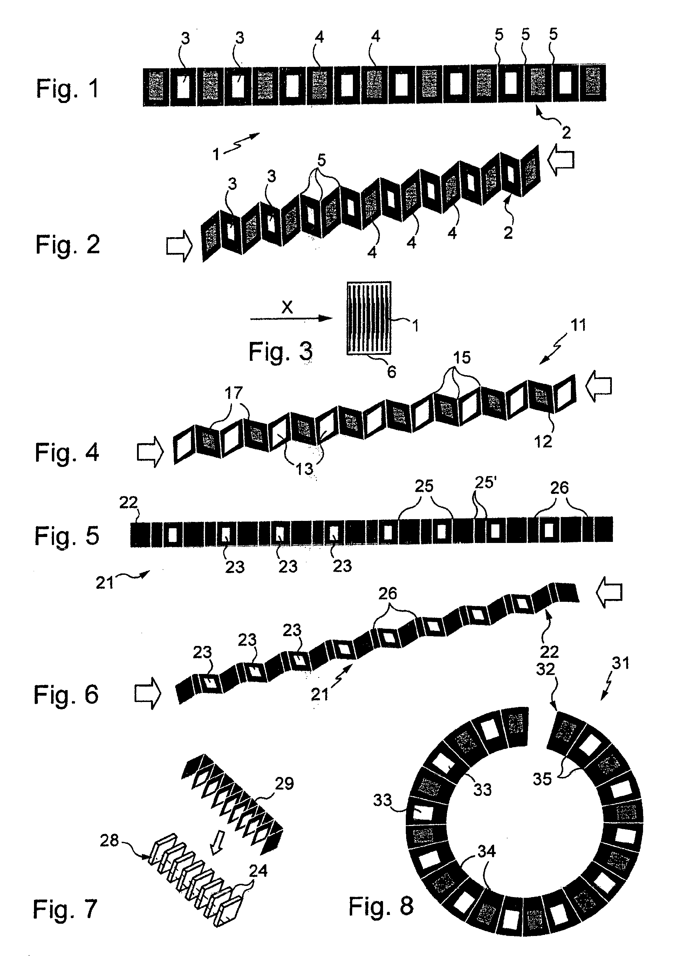

Les figures 1 à 8 représentent diverses configurations de divers exemples de charge sensible pour dosimétrie passive conformes à l'invention ; dans la mesure où un dosimètre comporte essentiellement une telle charge sensible et un boîtier contenant cette charge, une telle charge sensible est couramment appelée, par extension, dosimètre.

La figure 1 représente une charge sensible 1 comportant un support pliable 2 portant sur une même face une pluralité d'écrans photostimulables 3 dont chacun est séparé d'un écran adjacent par au moins une ligne de pli 5. En outre, le support 2 porte, sur la même face que celle portant les écrans photostimulables 3, une pluralité de feuilles intercalaires 4 à effet renforçateur ou absorbant pour un rayonnement que la charge sensible est destinée à mesurer ; ces feuilles intercalaires alternent avec les écrans, en étant séparés de chaque écran voisin par une ligne de pli 5 : il en découle que chaque écran est séparé d'un écran voisin par deux lignes de pli 5, et que de même chaque feuille intercalaire est séparée d'une feuille voisine par deux lignes de pli.

Le support pliable 2, représenté à la figure 1 en configuration déployée, plane, a une autre configuration représentée à la figure 3. Le passage de la configuration plane de la figure 1 à la configuration compacte de la figure 3 correspond à un pliage en accordéon, c'est-à-dire que le sens de pliage s'inverse d'une ligne de pliage à la suivante ; la figure 2 représente ce support en cours de pliage ; puisque les écrans alternent avec les feuilles intercalaires sur le support en configuration déployée plane (figure 1), ils alternent également dans la configuration empilée de la figure 3.

On peut noter que, puisque les écrans 3, d'une part, et les feuilles intercalaires 4, d'autre part, sont séparées des écrans ou des feuilles voisines par deux plis 5, tous les écrans 3 sont situés sur des portions du support qui sont toutes orientées dans la même direction (vers la gauche à la figure 2) tandis que toutes les feuilles intercalaires 4 sont situées sur d'autres portions du support 2 qui sont toutes orientées dans l'autre direction (vers la droite à la figure 2). Il en découle que les écrans sont équidistants les uns des autres dans l'empilement de la figure 3, dès lors que le support a une épaisseur constante, ce qui est le cas en pratique d'un support en bande ; de même les feuilles intercalaires sont équidistantes les unes des autres dans cet empilement. Il en découle également que, lors du pliage du support, chaque feuille intercalaire est intimement et directement plaquée sur toute la surface de la couche radiosensible d'un ERLM en vis-à-vis.

Dans la figure 3, la charge sensible 1 est placée dans un boîtier schématisé par un cadre repéré 6, de tout type connu approprié, par exemple conforme aux enseignements du document WO - 2009/030833 précité. Le dosimètre ainsi formé peut alors être soumis à un rayonnement, ici schématisé par une flèche repérée « X ».

Dans l'exemple ici considéré, les portions du support 2 sur lesquelles les écrans 3 et les feuilles intercalaires 4 sont fixées sont de forme rectangulaire, avec des dimensions égales, ce qui garantit une superposition précise des écrans et des feuilles intercalaires dans l'empilement de la figure 3, dès lors que les écrans et les feuilles ont été centrées précisément dans ces portions ; on peut aussi prévoir que les feuilles intercalaires soient de dimensions supérieures aux écrans, en longueur et largeur, afin d'assurer facilement un bon recouvrement de toute la surface des écrans en configuration pliée ; on peut ,en variante, prévoir que la dimension longitudinale (c'est-à-dire parallèle à la plus grande dimension du support, et donc perpendiculaire aux lignes de pliage 5) varie de manière régulière, soit en diminution, soit en augmentation, d'une quantité égale d'une portion à la suivante, ce qui peut permettre également une superposition précise des écrans et des feuilles dans l'empilement ; on comprend toutefois que, dans une telle variante, la forme globale de l'empilement aurait une section trapézoïdale, et non pas une forme de parallélogramme rectangle (voir la figure 3).

La figure 4 représente une variante de réalisation sans feuilles intercalaires rapportées

Cette figure 4 représente une charge sensible 11 comportant un support 12 portant sur une même face une pluralité d'écrans photostimulables 13 dont chacun est séparé d'un écran voisin par au moins une ligne de pliage 15. De même que dans l'exemple précédent, les écrans sont en fait séparés des écrans voisins par deux lignes de pliage ; les diverses lignes de pliage délimitent des portions de support qui sont toutes de forme rectangulaire et ont, comme dans l'exemple précédent, des dimensions identiques.

A la différence de la charge sensible des figures 1 à 3, le support 12 ne porte aucune feuille intercalaire ; en outre, il comporte des évidements 17, appelés fenêtres, centrés entre chaque ligne de pliage 15 ; la surface des fenêtres 17 est légèrement inférieure à celle des écrans 13 de manière à préserver un cadre pour solidariser ces derniers au support 12 ; le support comporte autant de fenêtres 17 qu'il y a de plages délimitées par les lignes de pliage ; on comprend qu'en conséquence, lorsque la charge sensible 11 est en configuration d'empilement, une grande portion de chaque écran n'est séparée d'un écran voisin par aucune épaisseur de support ni feuilles intercalaires. On peut analyser une telle charge sensible comme étant formée uniquement d'un empilement d'écrans, ce qui permet de détecter des rayonnements de très faible énergie qui pourraient être trop absorbés dans le support (typiquement entre quelques KeV, en utilisant des ERLM peu absorbants, et une centaine de KeV).

Les figures 5 à 7 représentent une variante de charge sensible repérée 21 dans son ensemble ; les éléments de cette charge sensible qui correspondent à des éléments des figures 1 à 3 sont désignés par des signes de référence qui se déduisent de ceux de ces figures par l'addition du nombre 20.

Cette charge sensible 21 comporte un support pliable 22 portant sur une même face une pluralité d'écrans photostimulables 23 dont chacun est séparé d'un écran voisin par au moins une ligne de pliage 25 (sur 180°), plus précisément par deux lignes de pliage 25. Cette charge sensible 21 comporte en outre une pluralité de feuilles intercalaires 24 mais, à la différence de l'exemple des figures 1 à 3, ces feuilles intercalaires sont indépendantes du support : plus précisément, ces feuilles sont solidarisées les unes aux autres en sorte de former un peigne 28 dont les dents sont formées par ces feuilles intercalaires. Après pliage, le support 22 forme, lui aussi tant qu'aucune pression ne lui est appliquée pour plaquer les écrans les uns contre les autres, un peigne, schématisé sous la référence 29, dont les dents sont constituées par les écrans et les portions de support qui les portent ; il est donc possible d'imbriquer ces deux peignes ainsi que cela est schématisé à la figure 7. Le support 22 peut, selon les besoins, être utilisé avec ou sans feuilles intercalaires indépendantes. Le fait de rendre les feuilles intercalaires indépendantes a notamment l'avantage de permettre d'utiliser des feuilles intercalaires d'une épaisseur très supérieure à celle des écrans.

On peut noter que le support 22 comporte des bandes étroites 26 alternant avec les écrans 23 (et les zones sans feuille intercalaire) ; ces bandes étroites définissent l'écartement des « dents » du peigne 29 et donc l'épaisseur maximale des feuilles intercalaires. Dans l'empilement, les lignes de pliage 25' longeant les bandes étroites 26 ne sont pliées que sur 90° (et non pas sur 180°), de sorte qu'une telle bande étroite 26 est, conjointement avec ces lignes de pliage adjacentes 25', l'équivalent d'une ligne de pliage au sens des figures 1 à 4 (ou d'une ligne de pliage 25 entre un écran 23 et une zone sans feuille intercalaire).

Le peigne formé par ces feuilles intercalaires indépendantes peut être formé par collage de ces feuilles sur un support plié en accordéon ; toutefois, de manière préférée, notamment en cas de feuilles intercalaires d'épaisseur importante, ces feuilles sont rapportées par des tranches de même orientation à un élément porteur (représenté en tirets à la figure 7).

La figure 8 représente un autre exemple de charge sensible pour dosimétrie passive conforme à l'invention. Sur cette figure les éléments similaires à ceux des figures 1 à 3 sont désignés par des signes de référence qui se déduisent de ceux utilisés sur ces figures par l'addition du nombre 30.

Cette charge sensible, notée 31, diffère principalement de la charge sensible 1 des figures 1 à 3 par le fait que le support 32 a non pas une forme rectiligne, mais une forme incurvée, avec un rayon de courbure constant et des lignes de pliage 35 qui convergent vers le centre (en pratique fictif) de ce support incurvé. Comme dans le cas des figures 1 à 3, le support 32 porte sur une même face une pluralité d'écrans photostimulables 33 dont chacun est séparé d'un écran voisin par au moins une ligne de pliage 35, plus précisément deux telles lignes, ainsi qu'une pluralité de feuilles intercalaires 34 à effet renforçateur ou absorbant qui alternent avec ces écrans en étant aussi séparées des feuilles intercalaires voisines par deux lignes de pliage. Mais, du fait que le support n'est pas rectiligne mais en arc de cercle (avec donc un centre unique), les diverses portions portant soit un écran soit une feuille intercalaire n'ont pas une forme rectangulaire mais une forme délimitée par deux arcs de cercle concentriques et deux lignes radiales. Toutefois, les écrans et les feuilles intercalaires peuvent avoir, comme dans l'exemple des figures 1 à 3, une forme rectangulaire : ainsi, après empilement, on obtient comme à la figure 3, une superposition précise des écrans et des feuilles intercalaires. En fait, il importe peu que les portions porteuses du support soient une forme rectangulaire ou non, puisque ce support n'a pas d'effet sensible sur les performances de la charge sensible obtenue.

Bien entendu, tous les commentaires formulés à propos de variantes possibles de cet exemple des figures 1 à 3 valent aussi pour cette configuration généralement incurvée de cette figure 8.

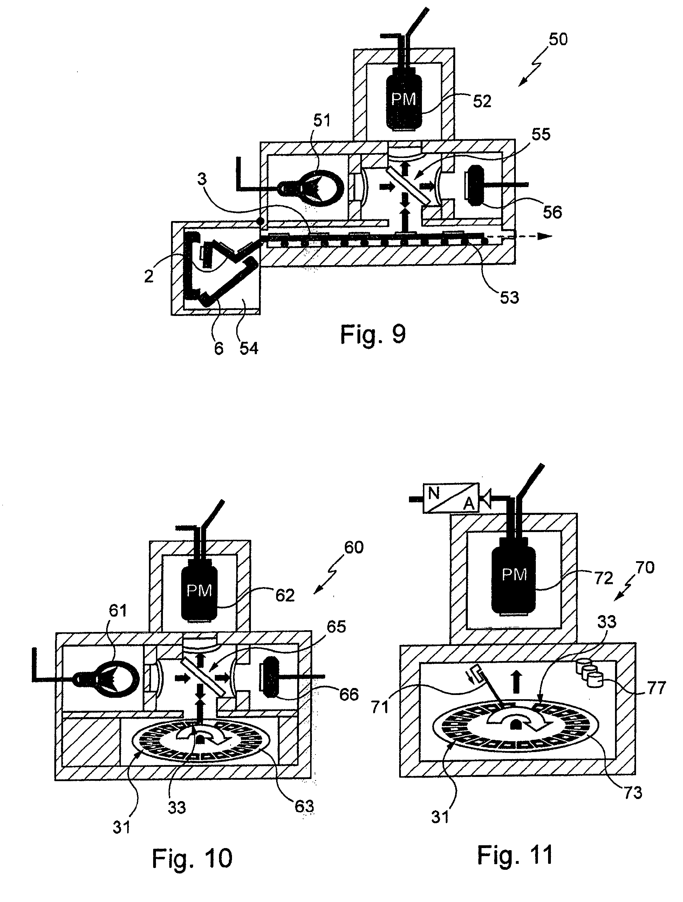

Les figures 9 à 12 représentent des systèmes adaptés à la lecture par illumination des écrans de charges sensibles conformes à l'invention, par exemple de l'un des types décrits ci-dessus.

Le système 50 de la figure 9 comporte une source d'illumination 51, un capteur 52 adapté à capter le résultat de l'illumination d'un écran 3 présent dans la zone d'action de la source 51, et un convoyeur 53 adapté à porter le support pliable 2 en configuration dépliée et à amener successivement les écrans, dans l'ordre dans lequel ils sont fixés sur ce support, dans cette zone d'action. A gauche, sur cette figure, est schématisée une zone de dépliage 54 où est représenté le boîtier 6 d'un dosimètre conforme à celui de la figure 3 à l'état ouvert et dont sort, en se dépliant, la charge sensible ayant été soumise au rayonnement à caractériser ; à droite, une flèche schématise la sortie du convoyeur par laquelle sort le support avec ses écrans. La référence 55 désigne dans son ensemble un système optique par lequel transite le faisceau d'illumination et le faisceau résultant ; un élément de contrôle 56 peut être prévu pour l'asservissement des divers composants du système.

La figure 10 représente un système analogue, adapté à la lecture par illumination d'une charge sensible 31 conforme à la figure 8. Les éléments similaires à ceux de la figure 9 sont désignés par des signes de référence se déduisant de ceux de la figure 9 par addition du nombre 10.

Ce système 60 comporte ainsi une source d'illumination 61, un capteur 62 adapté à capter le résultat de l'illumination d'un écran 33 présent dans la zone d'action de la source 61, et un élément porteur 63 adapté à porter le support pliable 32 en configuration dépliée en arc de cercle et à amener successivement les écrans 33, dans l'ordre dans lequel ils sont fixés sur ce support, dans cette zone d'action. Dans l'exemple représenté, ce système comporte également un système optique 65 et un élément de contrôle 66.

La figure 11 représente une variante de ce système de la figure 10. Les éléments similaires à ceux de cette figure 10 sont désignés par des signes de référence qui se déduisent de ceux de cette figure 10 par addition du nombre 10.

Ce système 70 comporte ainsi une source d'illumination 71, ici bien plus concentrée que dans les figures 9 et 10, formée d'un faisceau laser émis à partir d'un élément mobile 71, une platine 73 permettant la rotation du support 31 et un capteur 72. La rotation de la platine et la mobilité de l'élément 71 (notamment radiale) sont adaptées à amener successivement, et point par point, toute la surface des écrans en regard de cette source laser. Du fait de la haute concentration en un point du faisceau de la source d'illumination, le laser lit successivement, à la manière d'un faisceau de lecture de CD ou DVD, des parties seulement des écrans, mais en plusieurs passes décalées radialement les unes par rapport aux autres, grâce à la mobilité de l'élément 71, qui permettent d'explorer des parties complémentaires différentes de ces écrans ; cela permet au capteur, dont le signal est échantillonné, après un certain nombre de tours entiers, de reconstituer des images complètes à partir des lectures de ces parties.

Sur cette figure 11 est également schématisée une source d'illumination 77 pour réinitialiser les ERLM après leur lecture.

Le recalage des enregistrements numériques des signaux produits par les ERLM et ainsi détectés par le capteur peut être aisément automatisé, puisque la charge sensible a une géométrie connue et constante. Un logiciel peut en tirer toute l'exploitation voulue pour assurer la fusion de ces enregistrements et pour éventuellement restituer une image 3D de l'énergie emmagasinée dans la charge sensible à l'état empilé. En fait, il est à la portée de la personne du métier d'adapter les logiciels connus en matière de lecture d'écrans ERLM pour tenir compte de la relation géométrique simple que l'invention garantit entre les écrans successifs.

Ce logiciel peut en déduire, en conséquence, le tracé de la courbe de dépôt de l'énergie du rayonnement au cours de sa progression dans l'épaisseur du dosimètre et la détermination de l'énergie ou du spectre du rayonnement, l'extrapolation de la courbe à la dose dans l'air, la prise en compte des fonctions de réponse spectrale pour la conversion de la dose en Kerma dans l'air, etc.

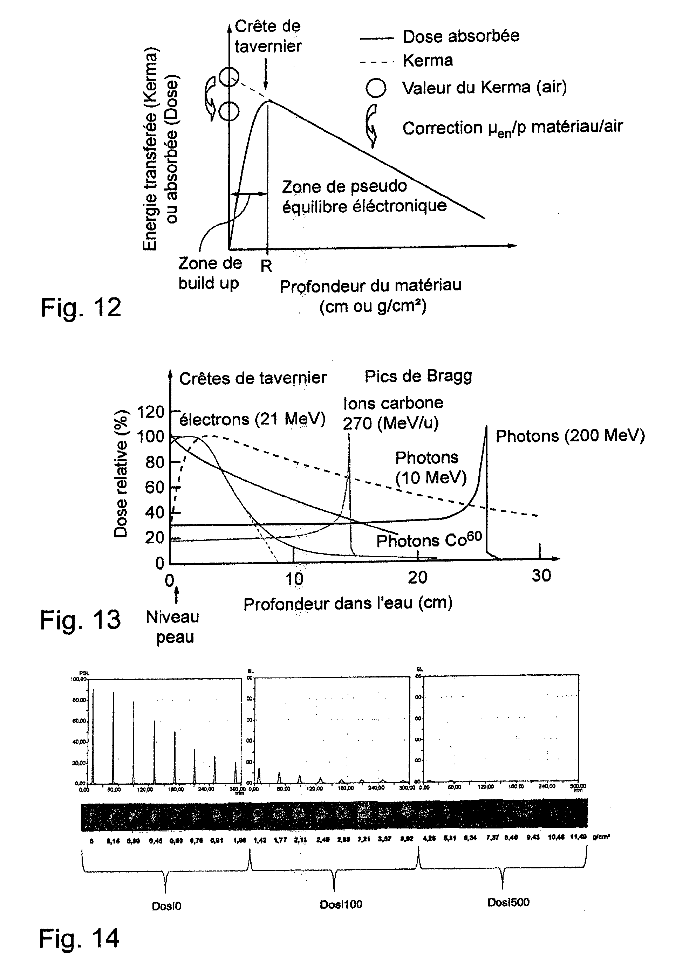

Les informations obtenues lors de l'analyse automatique donnent en effet accès à la nature et à l'énergie du rayonnement via une analyse comparative de la courbe de dépôt d'énergie avec des modèles ou des simulations Monte-Carlo préétablies et placées dans une base de données. La figure 12 présente une courbe typique obtenue avec un rayonnement photonique de haute énergie (> 1 MeV). Cette fonction « spectromètre » du dosimètre peut éventuellement s'étendre jusqu'à la reconstruction du spectre du rayonnement ionisant en se basant sur les algorithmes mathématiques présentés dans la littérature (voir par exemple les articles de Sauer et al, de Baker et al, ou de Manciu et al, identifiés ci-dessus à propos des écrans ERLM). La courbe de dépôt d'énergie permet de vérifier que l'équilibre électronique a été atteint lors de la mesure et révèle, notamment dans la zone dite de « build-up », la présence éventuelle de rayonnements diffusés. La cohérence des points de mesure obtenus après la crête de Tavernier, qui doivent s'aligner sur une fonction de régression exponentielle, permet d'affiner l'extrapolation à la dose dans l'air. Enfin, la position de la crête de Tavernier, correspondant à la portée R des particules chargée à une certaine énergie de rayonnement incident, doit être en pratique en cohérence avec la transmission du rayonnement déterminée dans la zone de la courbe à l'équilibre électronique. Tout cela donne des éléments de garantie quant à la validité des mesures obtenues et la bonne adaptation du dosimètre au rayonnement à mesurer (selon sa nature et son énergie).

Avec les dispositifs simplifiés de lecture 50, 60 et 70, il y a au moins autant de cycles de lectures qu'il y a de charges sensibles au sein d'un dosimètre donné. Avec un numériseur du commerce dédié à la radiographie, plusieurs charges sensibles peuvent être lues en une seule passe.

Le contenu d'un dosimètre conforme à l'invention est adaptable à différents types de rayonnements (X, gamma, neutrons, protons, électrons...). Différentes versions peuvent en effet être construites pour chaque famille de rayonnement en adaptant les écrans ERLM (nombre et épaisseurs) ainsi que la nature et l'épaisseur des feuilles intercalaires. Un tel dosimètre peut se révéler particulièrement utile en radiothérapie externe par faisceau d'électrons, ou par d'autres particules ionisantes (proton-thérapie, hadron-thérapie), avec l'avantage de déterminer précisément et automatiquement la position de la crête de Tavernier ou du pic de Bragg (voir la figure 13) dans l'épaisseur des tissus et de valider ainsi les paramètres de faisceau avant l'exposition du patient.

Dans ce cadre, la fonction d'imageur dosimétrique peut permettre de valider les caractéristiques géométriques d'un faisceau étroit (position, dimensions, distribution spatiale) et d'en déterminer le devenir balistique dans l'épaisseur. La figure 14 présente le cas d'un faisceau d'électrons de 17 MeV « imagé » avec un empilement de 3 charges sensibles (ou « dosimètres », par extension) à écrans ERLM solidarisés : le $1^{er}$ dispositif sans feuille intercalaire (Dosi0), le second avec des feuilles de tantale de 100 $\mu$m d'épaisseur (Dosi100) et le dernier avec des feuilles de tantale de 500 $\mu$m d'épaisseur (Dosi500).

Un tel dosimètre possède une très grande sensibilité. Son seuil de détection, proportionnel au nombre d'écrans ERLM empilés, est inférieur à 0,5 $\mu$Gy pour un empilement de 8 écrans ERLM. Il conserve une réponse linéaire jusqu'à 6 Gy voire au-delà (100 Gy d'après l'article précité de Olch et al). Ce dosimètre peut donc fonctionner avec une dynamique linéaire d'enregistrement supérieure à 7 décades ($10^7$). Ces propriétés le rendent particulièrement attractif. Ainsi, il est bien adapté aux mesures de faibles niveaux de rayonnement car les temps d'exposition peuvent être réduits d'un facteur 5 à 20 par rapport aux autres dosimètres passifs. Des dosimètres à lecture en temps quasi réel ou faiblement différés sont alors possible pour des mesures environnementales, des contrôles de radioprotection, des contrôles de radiodiagnostic, etc. Sa grande latitude d'exploitation fait qu'il s'adapte également aux mesures à haut niveau de dose, soit des mesures dans un flux direct, ce qui permet finalement de caractériser par exemple toute une installation d'irradiation (centrale nucléaire, laboratoire de radiothérapie,...) et son environnement avec le même moyen et la même méthodologie. De manière préférée, la lecture des ERLM exposés à très haute dose avec les appareils 50, 60, 70 ou les numériseurs du commerce est effectuée en limitant la tension d'alimentation du capteur ou en insérant une densité neutre optique devant, sous peine d'éblouir et saturer le capteur.

Enfin, la simplicité d'utilisation et le faible coût de ce dosimètre (réutilisable) autorise à augmenter le nombre de points de mesure pour affiner la précision statistique de la mesure de dose, la connaissance de la répartition spatiale ou spectrale des rayonnements, ou diminuer encore le seuil de détection.

## Exemple de réalisation d'un dosimètre en géométrie accordéon.

A titre d'exemple conforme à la géométrie de la figure 1, des charges sensibles pour dosimétrie passive sont constituées de 8 ERLM et (sauf pour l'une d'entre elles) de 9 feuilles métalliques légèrement plus grandes, collés en alternance sur la même face d'un support en papier Canson noir à 160 g/m$^2$ de forme rectangulaire (dimensions : 34x3x0.22 cm$^3$, poids = 1,7g).

Les 8 ERLM (dimensions : 1,5x2x0.486 cm$^3$, poids = 325 mg) sont découpés dans un écran de type MS commercialisé par Fujifilm. Les 9 feuilles métalliques (1,25x2.5cm$^2$) sont prélevées dans une feuille de tantale commercialisée par Goodfellow ; trois groupes de feuilles de tantale sont constitués, avec des épaisseurs égales à 125 $\mu$m, 200 $\mu$m ou 530 $\mu$m. Une première charge sensible est dépourvue de feuilles de tantale, et trois autres charges sensibles sont constituées avec l'un des groupes de feuilles précité. Ces charges sensibles forment chacune un dosimètre. Ces dosimètres ont été dénommés DosiERLM, et se déclinent en Dosi0, Dosi100, Dosi200 ou Dosi500 selon l'épaisseur de tantale utilisée. Ils sont ainsi bien adaptés à la détection de rayonnements gamma, X et aux faisceaux d'électrons. Le poids total d'un dosimètre est compris entre 4,3g (Dosi0) et 33,5g (Dosi500).

Le support papier est plié « en accordéon » de manière à mettre chaque ERLM en vis-à-vis d'une feuille métallique. L'espace entre les ERLM est constant afin d'obtenir une bonne superposition lors du pliage. L'exploitation des données avec le logiciel s'en trouve simplifié. Cet assemblage constitue ainsi un empilement de 8 cellules papier/Ta/ERLM/papier se terminant par une feuille de tantale (voir les figures 1 et 2)

**EP 2 671 096 B1**

L'assemblage replié en position compacte est placé dans un boîtier en plastique de faible épaisseur pour limiter l'atténuation du rayonnement à mesurer, étanche à la lumière pour éviter un effacement prématuré de l'énergie stockée durant l'irradiation dans une zone éclairée, et comportant éventuellement une épaisseur de mousse collée à l'arrière, sur sa face interne, pour exercer une légère pression destinée à plaquer convenablement les ERLM sur les feuilles métalliques. Les boîtiers utilisés dans cet exemple sont commercialisés par Nintendo pour stocker de petites disquettes de jeu. Le poids du boîtier est de 8 g. En variante, plusieurs charges sensibles peuvent être implantées dans un même boitier d'épaisseur appropriée.

Ces dosimètres ont été testés auprès de sources d'irradiation X et gamma. Les résultats les plus importants sont fournis ci-après.

Le dosimètre est exposé tel quel aux radiations, en orientant sa face « avant » vers la source de rayonnement perpendiculairement à celui-ci (cette face est bien repérée, à la fois sur le dosimètre et le boîtier).

Pour la dosimétrie de rayonnements multi-énergétiques (type rayonnements de freinage), un compromis doit être fait sur la nature et l'épaisseur des matériaux constituant les feuilles métalliques et le support pour qu'ils soient suffisamment « transparents » aux composantes de basse énergie tout en conservant suffisamment de masse surfacique pour atteindre l'équilibre électronique à haute énergie. Dans l'exemple ici considéré, le dosimètre Dosi0 (sans écrans métalliques) tel que constitué est utilisé pour la détection des rayonnements de faible énergie dans la gamme 50 keV à 1,5 MeV. Ce seuil en énergie peut être diminué en réduisant l'épaisseur et la densité du (des) support(s) sous la couche radiosensible et en découpant des fenêtres dans le support (voir la figure 4).

Les gammes de fonctionnement des autres dosimètres en mode « dosimètre » ont été prises comprises entre :

• 100 KeV et 7 MeV pour le Dosi100
• 200 KeV et 10 MeV pour le Dosi200
• 200 KeV et 20 MeV pour le Dosi500

En pratique, en mode « dosimétrie », on comprend qu'un Dosi0 et un Dosi500 couvrent à eux deux à peu près toute la gamme d'énergies de rayonnements photoniques que l'on peut rencontrer couramment.

Les compositions détaillées des dosimètres réalisés et testés sont données ci-dessous. Les quatre dernières lignes du tableau correspondent à la constitution des ERLM « Fujifilm ®» de type MS utilisés.

| Couche | Matériau | Composition massique (%) | Densité (g/cm$^3$) | Epaisseur (μm) | M.S. (g/cm$^2$) | Nb de couches par dosimètre |
|---|---|---|---|---|---|---|
| Face avant ou arrière du boîtier | Plastique PMMA | H : 8,05 C : 59,99 O : 31,96 | 1,19 | 1080 | 0,1285 | 2 |
| Papier Canson 160 g/m$^2$ | Acétate de Cellulose | H : 6,22 C : 44,44 O : 49,34 | 0,76 | 220 | 0,0167 | 17 |
| Feuille métallique | Tantale | Ta: 100 | 16,58 | 0, 125 200 ou 530 | 0, 0,2073 0,3316 0,8787 | 0 ou 9 |
| Couche de protection ERLM | PET téréphtalate | H : 4,2 C : 62,5 O : 33,3 | 1,38 | 9 | 0,0012 | 8 |

| Couche radiosensible ERLM | BaF(Br,I) : $Eu^{2+}$ | H : 0,32<br>C : 3,01<br>N : 1,35<br>O : 6,42<br>F : 7,14<br>Br : 25,54<br>I : 4,51<br>Ba : 51,66<br>Eu : 0,05 | 3,4 | 115 | 0,0391 | 8 |
|---|---|---|---|---|---|---|
| Support souple ERLM | PET téréphtalate | H : 4,2<br>C : 62,5<br>O : 33,3 | 1,38 | 202 | 0,0279 | 8 |
| Support à ferrite ERLM | Epoxy-ferrite | H : 2,7<br>C : 16,4<br>O : 4,4<br>Fe : 76,5 | 3,01 | 160 | 0,0482 | 8 |

Après exposition, le dosimètre est déployé en configuration de lecture et les 8 ERLM sont scannés en une seule passe dans un lecteur d'ERLM de type BAS 2500 ou FLA 7000 (gamme Fujifilm ®) ou tout autre lecteur équivalent. Si l'on souhaite éviter toutes pertes de signal (fading) induites par effacement naturel après l'exposition, il est recommandé de lire les ERLM dans les heures suivant l'exposition. Ces pertes sont toutefois très faibles avec des écrans de type MS à température ambiante : elles sont de 10 % après 1 jour de latence et de 40 % après 1 mois.

Afin de permettre la lecture dans un lecteur du commerce, un masque peut être réalisé dans un ERLM de dimension standard en y pratiquant 8 fenêtres et sous lequel est plaqué le support de la charge en mettant en correspondance les 8 fenêtres avec les 8 ERLM. Ce masque peut être utilisé pour le convoyage du dosimètre dans un lecteur Fujifilm ® (ce dernier est équipé de courroies ou d'un plateau aimanté mobile sur lesquels la face arrière des ERLM, contenant de la ferrite, est plaquée).

Les opérations manuelles réalisées entre l'extraction du dosimètre de son boîtier et l'introduction dans le lecteur sont avantageusement effectuées sous un éclairage réduit (10 lux recommandés) pour éviter l'effacement prématuré de l'énergie stockée durant l'irradiation. Le pas de numérisation est généralement réglé à 100 $\mu$m, la latitude à 5, et la sensibilité du lecteur au maximum (10 000).

L'image numérique obtenue est traitée en routine, et en quelques secondes, avec des algorithmes qui peuvent être mis en oeuvre dans des environnements de type Matlab ®. Un exemple de traitement est donné ci-après :

1 - Conversion de l'image numérique en intensité de photons de luminescence reçus par unité de surface (PSL/mm$^2$). Cette conversion est, en général, réalisée automatiquement par le scanner. Cette étape peut être plus élaborée si l'on utilise les modes de réduction de la sensibilité disponibles sur certains appareils.

2 - Soustraction du bruit intrinsèque du lecteur et correction des niveaux selon le nombre de numérisations réalisés successivement avec le même dosimètre. Lorsque les doses mesurées sont trop fortes et saturent l'appareil de lecture, il est recommandé de réduire la sensibilité du lecteur (en pratique, on diminue la tension d'alimentation du photomultiplicateur utilisé dans ces lecteurs), voire de placer une densité optique neutre calibrée devant la photocathode du photomultiplicateur. A haut niveau de dose (typiquement de 10 mGy à plusieurs Grays), une densité neutre de l'ordre de 2,6 est utilisée. Le programme d'exploitation prend en compte cette densité étalonnée. Si les doses ne saturent que faiblement l'appareil de lecture, on peut réaliser plusieurs lectures successives jusqu'à l'obtention d'un niveau de signal compatible avec la dynamique du lecteur. La perte de signal découlant des lectures successives étant reproductible, il suffit d'appliquer une correction préétablie pour obtenir la valeur réelle du signal que l'on aurait obtenue en première lecture sans saturation.

3 - Reconnaissance automatique de la géométrie du dosimètre et repérage de chaque ERLM (équidistants).

4 - Extraction de la partie centrale de l'image de chacun des ERLM afin de s'affranchir des effets de bord.

5 - Calculs de la moyenne et de l'écart-type (déviation standard SD) de l'intensité des pixels dans la partie centrale.

6 - Correction des moyennes calculées à l'étape précédente pour tenir compte des inhomogénéités spatiales introduites par le lecteur et des différences de réponse des ERLM (reproductibilité) : à chaque ERLM correspond un facteur de correction qui a été préalablement mesuré en exposant un dosimètre déployé à un rayonnement uniforme.

7 - Calcul des facteurs de transmission des rayonnements d'une cellule à l'autre. Une cellule est constituée de l'ensemble "support/Ta/ERLM/support". Le facteur de transmission s'obtient par division de l'intensité moyenne mesurée dans l'ERLM (n+1) par l'intensité moyenne mesurée dans l'ERLM (n). Les ERLM sont numérotés par ordre croissant à partir de celui faisant face à la source de rayonnement.

8 - Calcul de l'énergie moyenne efficace du rayonnement incident, dite "énergie équivalente" pour obtenir la même transmission en rayonnement monochromatique, par comparaison des facteurs de transmission à une base de données théorique tabulant les facteurs de transmission d'une cellule à l'autre pour le dosimètre utilisé et pour différentes énergies de rayonnements monochromatiques. A cette étape, seuls les ERLM N° 3 à 7 sont exploités afin de garantir que l'on est dans la zone de pseudo équilibre électronique (par ailleurs, les ERLM 1, 2 et 8 subissent parfois l'influence de rayonnements diffusés et rétrodiffusés, peu pénétrants car de basse énergie, en plus du rayonnement direct à mesurer, ce qui les rend impropres pour le tracé de la fonction exponentielle de l'atténuation du flux : voir la tache 10 plus loin). Il est aussi possible de sélectionner automatiquement les ERLM à l'équilibre électronique, selon par exemple la position de la crête de Tavernier lorsque celle-ci est présente. Un exemple de formule pour le calcul de l'atténuation est donné ci-après :

$$Att_{théo\ (t)} = exp\ ((\mu_{Ta\ (E)} * X_{Ta}) + (-\mu_{ERLM(E)} * X_{ERLM}) + (-\mu_{papier(E)} * X_{papier}))\ (I)$$

Où $\mu_{TA}$, $\mu_{papier}$, $\mu_{ERLM}$ (en cm$^3$) sont respectivement les coefficients d'atténuation linéique des photons dans le tantale, le support papier et l'ERLM (assimilé en première approximation à du téflon dans cette formule). La variable x représente l'épaisseur des différents matériaux (en cm).

Des différences sont apparues, notamment à partir de 700 keV, entre le modèle analytique et les simulations Monte-Carlo. Elles ont été principalement attribuées aux rayonnements diffusés dans les cellules et à l'effet renforçateur des feuilles de tantale qui ne sont pas pris en compte dans le modèle analytique.

Dans un domaine d'énergies inférieures au MeV, correspondant au fonctionnement de la plupart des générateurs X mobiles dédiés à la radiographie industrielle et médicale, la correspondance se fait relativement facilement car la transmission évolue rapidement avec l'énergie du rayonnement. Au-delà du MeV, la transmission atteint un "plateau" avant de décroître sous l'effet de la création de paires. L'énergie "équivalente" devient plus difficile à déterminer avec précision, notamment avec un DosiERLM à faible épaisseur de tantale. Dans ce domaine d'énergie un dosimètre constitué de feuilles de tantale de 5 mm d'épaisseur serait mieux adapté pour discriminer l'énergie du rayonnement incident (Dosi5000). Pour ces raisons, les domaines d'utilisation en mode "spectromètre" de chaque dosimètre sont avantageusement les suivants :

- de 50 keV à 300 keV avec le Dosi0
- jusqu'à 800 keV avec le Dosi100
- jusqu'à 1 MeV avec le Dosi200
- jusqu'à 1,5 MeV avec le Dosi500
- au-delà de 1,5 MeV avec le Dosi 5000.

Ces domaines d'utilisation en mode "spectromètre" peuvent être élargis à ceux du mode "dosimétrie" plus étendus vers les hautes énergies, par exemple en prenant en compte la position de la crête de Tavernier ou, plus encore, la forme complète de la courbe de dépôt d'énergie pour comparaison avec des simulations Monte-Carlo préétablies pour des spectres typiques.

9 - Conversion des PSL/mm$^2$ en "dose équivalent Co$^{60}$" à partir de la valeur de sensibilité déduite de l'étalonnage du dosimètre au Co$^{60}$.

Les doses obtenues sont ensuite automatiquement représentées dans un graphique en fonction de la masse surfacique traversée dans le dosimètre (en g/cm$^2$). Chaque point correspond à un ERLM. La masse surfacique traversée augmente avec le rang de l'ERLM dans l'empilement.

10 - Calcul de la courbe de régression exponentielle (conforme à la formule analytique (I) sur les points obtenus avec les ERLM 3 à 7 et déduction du point d'intersection avec l'axe des ordonnées. Le niveau de ce point correspond à la dose$_{air}$ équivalent Co$^{60}$.

11 - Addition numérique (appelée aussi fusion ou empilement numérique), pixels à pixels, des huit images ERLM, après correction de l'atténuation du rayonnement dans les cellules précédant l'ERLM considéré (déduite de la valeur moyenne de la transmission calculée en -7-).

12 - Calcul de la moyenne et de l'écart-type (Standard Déviation) de l'intensité des pixels dans l'image résultant de la fusion, puis conversion des PSL/mm$^2$ en "dose équivalent Co$^{60}$. On obtient ainsi une valeur de dose$_{air}$ équivalent Co$^{60}$ après fusion d'images.

13 - Les fonctions de réponse spectrale des dosimètres ont été calculées avec le code MCPN. A l'issue des étapes -10- et -12-, les doses en équivalent Co$^{60}$ sont corrigées avec ces fonctions pour obtenir des Kerma dans l'air. La correction est réalisée soit par l'opérateur s'il a une connaissance fine du spectre, soit par le programme à partir de l'énergie moyenne déterminée en - 7-, soit plus finement par le programme si ce dernier est renseigné sur le type de spectre continu ou l'énergie du rayonnement (exemple : sources monochromatiques) : la table de données du programme contient actuellement différentes réponse spectrales pour un rayonnement mono-énergétique entre 50 KeV et 10 MeV ou des rayonnements de freinage entre 4 MeV et 20 MeV, ainsi que des spectres de rayonnements de freinage filtrés par des objets massiques.

Après utilisation, le dosimètre est réinitialisé en exposant la face radiosensible des ERLM à une source de lumière blanche intense : un flash, une rampe de tubes au néon, une ou plusieurs lampes halogènes, la lumière solaire...

Après un stockage prolongé, il est nécessaire de réinitialiser les dosimètres avant de les utiliser afin d'effacer l'énergie du rayonnement naturel emmagasinée durant le temps de stockage. A raison de 1 à 15 - μGy/jour (suivant le site en France), ce rayonnement devient particulièrement gênant si le dosimètre doit mesurer un niveau d'exposition proche de son seuil de détection (0,5 μGy). Le dosimètre devra donc être réinitialisé peu avant emploi à bas niveau d'exposition. Cela s'applique également au masque, si celui-ci est constitué avec un ERLM.

## Exemple de réalisation d'un lecteur spécifique

Les commentaires précédents résultent de l'utilisation d'un lecteur du commerce légèrement adapté au moyen d'un masque. Afin d'éviter l'acquisition d'un tel appareil de lecture bidimensionnel perfectionné et coûteux, si l'opérateur n'en a pas d'autres usages, on peut construire un appareil plus simple dédié uniquement à la dosimétrie.

A titre d'exemple, le lecteur de la figure 9 est constitué des éléments suivants : une source d'illumination 51 formée d'une lampe blanche (néon ou lampe halogène par exemple) équipée d'un filtre passe-haut à 500 nm, un capteur 52 formé d'un photomultiplicateur associé à un filtre interférentiel centré sur 400 nm, une photodiode 56 de monitoring de la source d'illumination, un système optique 55 formant un dispositif de transfert des signaux optiques (lentilles, endoscopes, fibres optiques ou guides de lumière), un bâti, un système de pilotage et d'enregistrement, une unité de traitement numérique éventuellement externe, une alimentation électrique pouvant être une batterie.

On obtient ainsi directement une valeur d'intensité moyenne de luminescence pour chaque ERLM; De plus, l'éjection de la bande d'ERLM du boîtier peut être automatisée et le système de convoyage des ERLM vers la lampe rendu assez sommaire (aucun besoin de moteurs à pas micrométriques comme sur les lecteurs actuels) car une précision de positionnement de quelques 1/10ème de mm est suffisante. Ce dispositif permet de simplifier amplement l'appareillage de lecture, le rendant transportable et peu onéreux. Il est particulièrement adapté aux mesures dosimétriques environnementales et aux interventions hors laboratoires (sécurité, civile, DDE, centrales nucléaires, mines d'uranium...).

Le convoyage latéral du dosimètre dans l'appareil peut être remplacé par une platine tournante 63 dans le cas d'un support ERLM circulaire (ce support se plie également en accordéon) - cela a été représenté à la figure 10.

Si l'opérateur souhaite conserver toutes les fonctionnalités de l'invention, et notamment l'accès à l'imagerie dosimétrique pour caractériser des faisceaux étroits par exemple, l'illumination des ERLM par une lampe halogène est avantageusement remplacée par celle d'une diode laser de longueur d'onde adaptée à la désexcitation des pièces (cela correspond à l'exemple de la figure 11). Au cours de la lecture, celle-ci est entraînée vers le centre du plateau sur une latitude couvrant la hauteur des ERLM. Le plateau tournant, à une vitesse compatible avec la durée de désexcitation des pièces, permet un scan concentrique. Combiné avec le déplacement lent de la diode laser, le scan devient hélicoïdal et permet de couvrir toute la surface du plateau, à la manière d'un lecteur de CD. Les photons de luminescence libérés sont ensuite détectés par le photomultiplicateur associé à un filtre interférentiel pour être traités de façon classique (amplification, échantillonnage et conversion analogique / numérique). L'image est ensuite reconstruite sous forme d'une matrice pour être stockée et traitée par des moyens informatiques internes ou externes. A l'issue du scan, une à trois lampes halogènes permettent de réinitialiser rapidement le dosimètre, si une seconde lecture n'est pas demandée.

## Revendications

1. Charge sensible (1, 11, 21, 31) pour dosimètre passif comportant une pluralité d'écrans souples photostimulables (3, 13, 23, 33) adaptés à être empilés au sein d'un boîtier de dosimètre et comportant chacun une couche radiosensible en matériau radio-photo-luminescent dont la lecture peut ainsi être effectuée en différé par illumination, la charge sensible étant **caractérisée en ce que** ces écrans étant solidaires d'un support pliable (2, 12, 22, 32) à deux configurations, à savoir une configuration repliée de détection, dans laquelle ces écrans sont empilés les uns sur les autres et une configuration dépliée de lecture, dans laquelle ces écrans sont disposés les uns à côté des autres sur une même face du support.

2. Charge sensible selon la revendication 1, dans laquelle les écrans sont disposés avec deux plis (5, 15, 25, 35) entre les écrans successifs, grâce à quoi, en configuration repliée, les écrans sont tous disposés en étant orientés dans une même direction.

3. Charge sensible selon la revendication 1 ou la revendication 2, comportant de 5 à 20 écrans photostimulables.

4. Charge sensible selon l'une quelconque des revendications 1 à 3, dans laquelle le support pliable sur lequel les écrans sont fixés est une bande rectiligne globalement rectangulaire (2, 12, 22), avec des lignes de pliage (5, 15, 25) qui sont parallèles.

5. Charge sensible selon l'une quelconque des revendications 1 à 3, dans laquelle le support pliable sur lequel les écrans sont fixés est une bande en arc de cercle (32), avec des lignes de pliage (35) qui passent par le centre de cet arc de cercle.

6. Charge sensible selon l'une quelconque des revendications 4 ou 5, dans laquelle les lignes de pliage sont équidistantes.

7. Charge sensible selon l'une quelconque des revendications 1 à 6, dans laquelle le support est formé de papier à haute résistance mécanique ou d'un film plastique.

8. Charge sensible selon l'une quelconque des revendications 1 à 7, dont les écrans sont réalisés on fluoro-halogénure de baryum dopés à l'europium.

9. Charge sensible selon l'une quelconque des revendications 1 à 8, dont le support porte en outre des feuilles intercalaires de renforcement/absorption (4, 14, 24) solidarisées au support, en étant alternées avec les écrans photostimulables, les écrans étant séparés par deux plis les uns des autres, de même que les feuilles intercalaires sont séparées par deux plis les unes des autres.

10. Charge sensible selon la revendication 9, dont les feuilles intercalaires sont réalisées en un matériau métallique tel que le tantale, le cuivre ou le plomb, ou en un matériau choisi parmi le cadmium, le gadolinium ou un matériau hydrogéné.

11. Dosimètre passif comportant au moins une charge sensible selon l'une quelconque des revendications 1 à 8, des feuilles intercalaires à effet renforçateur/absorbant étant disposées, en configuration repliée du support pliable, en alternance avec les écrans photostimulables.

12. Dosimètre passif selon la revendication 11, dans lequel les feuilles intercalaires (28) sont indépendantes du support pliable.

13. Dosimètre passif selon la revendication 12, dans lequel ces feuilles intercalaires sont solidaires d'un autre support (28).

14. Dosimètre passif selon la revendication 13, dans lequel les feuilles intercalaires sont liées les unes aux autres par un même côté latéral, en sorte de former un peigne (28).

15. Procédé de lecture par illumination d'une charge sensible selon l'une quelconque des revendications 1 à 10, comportant un élément porteur (53, 63, 73) pour le support en configuration dépliée de la charge sensible, une source d'illumination (51, 61, 71), et un capteur de lecture (52, 62, 72) adapté à capter la réponse d'un écran soumis à l'action de la source d'illumination, l'élément porteur amenant successivement les écrans solidaires du support déplié dans la zone d'action de la source d'illumination et du capteur de lecture.

**Patentansprüche**

1. Empfindliche Füllung (1, 11, 21, 31) für passive Dosimeter mit einer Mehrzahl von nachgiebigen, fotostimulierbaren Schirmen (3, 13, 23, 33), die dazu geeignet sind, innerhalb eines Gehäuses des Dosimeters gestapelt zu werden, und jeweils eine strahlungsempfindliche Schicht aus Radiofotolumineszenz aufweisendem Material enthalten, wobei das Ablesen somit durch Beleuchtung zeitversetzt erfolgen kann, wobei die empfindliche Füllung **dadurch gekennzeichnet ist, dass** diese Schirme fest mit einem faltbaren Träger (2, 12, 22, 32) mit zwei Konfigurationen verbunden sind, nämlich eine zusammengefaltete Erfassungskonfiguration, in welcher diese Schirme aufeinandergestapelt sind, und eine auseinandergefaltete Ablesekonfiguration, in welcher diese Schirme auf einer gleichen Seite des Trägers nebeneinander angeordnet sind.

2. Empfindliche Füllung nach Anspruch 1, wobei die Schirme mit zwei Knickstellen (5, 15, 25, 35) zwischen den aufeinanderfolgenden Schirmen angeordnet sind, wodurch in zusammengefalteter Konfiguration die Schirme alle in einer gleichen Richtung ausgerichtet angeordnet sind.

3. Empfindliche Füllung nach Anspruch 1 oder Anspruch 2, enthaltend 5 bis 20 fotostimulierbare Schirme.

4. Empfindliche Füllung nach einem der Ansprüche 1 bis 3, wobei der faltbare Träger, auf dem die Schirme befestigt sind, ein insgesamt rechteckförmiges, geradliniges Band (2, 12, 22) ist, bei dem die Falzlinien (5, 15, 25) parallel verlaufen.

5. Empfindliche Füllung nach einem der Ansprüche 1 bis 3, wobei der faltbare Träger, auf dem die Schirme befestigt sind, ein kreisbogenförmiges Band (32) ist, bei dem die Falzlinien (35) durch den Mittelpunkt dieses Kreisbogens verlaufen.

6. Empfindliche Füllung nach einem der Ansprüche 4 oder 5, wobei die Falzlinien abstandsgleich sind.

7. Empfindliche Füllung nach einem der Ansprüche 1 bis 6, wobei der Träger aus Papier mit hohem mechanischem Widerstand oder aus einer Kunststofffolie gebildet ist.

8. Empfindliche Füllung nach einem der Ansprüche 1 bis 7, wobei die Schirme aus mit Europium dotiertem Bariumfluorhalogenid ausgebildet sind.

9. Empfindliche Füllung nach einem der Ansprüche 1 bis 8, wobei der Träger ferner Verstärkungs-/Absorptions-Zwischenlagen (4, 14, 24) trägt, die fest mit dem Träger verbunden sind und sich dabei mit den fotostimulierbaren Schirmen abwechseln, wobei die Schirme durch zwei Falze voneinander getrennt sind, ebenso wie auch die Zwischenlagen durch zwei Falze voneinander getrennt sind.

10. Empfindliche Füllung nach Anspruch 9, wobei die Zwischenlagen aus einem Metallmaterial, wie etwa Tantal, Kupfer oder Blei, oder aus einem Material ausgewählt aus Cadmium, Gadolinium oder einem hydrierten Material ausgebildet sind.

11. Passives Dosimeter mit zumindest einer empfindlichen Füllung nach einem der Ansprüche 1 bis 8, wobei Zwischenlagen mit Verstärkungs-/Absorptionseffekt in zusammengefalteter Konfiguration des faltbaren Trägers abwechselnd mit den fotostimulierbaren Schirmen angeordnet sind.

12. Passives Dosimeter nach Anspruch 11, wobei die Zwischenlagen (28) unabhängig von dem faltbaren Träger sind.

13. Passives Dosimeter nach Anspruch 12, wobei diese Zwischenlagen fest mit einem weiteren Träger (28) verbunden sind.

14. Passives Dosimeter nach Anspruch 13, wobei die Zwischenlagen über eine gleiche laterale Seite miteinander verbunden sind, so dass sie einen Kamm (28) bilden.

15. Verfahren zum Ablesen durch Beleuchtung einer empfindlichen Füllung nach einem der Ansprüche 1 bis 10, enthaltend ein Tragelement (53, 63, 73) für den Träger der empfindlichen Füllung in auseinandergefalteter Konfiguration, eine Leuchtquelle (51, 61, 71) und einen Lesesensor (52, 62, 72), der dazu geeignet ist, die Reaktion eines Schirms zu erfassen, welcher der Wirkung der Leuchtquelle ausgesetzt wird, wobei das Tragelement nacheinander die fest mit dem auseinandergefalteten Träger verbundenen Schirme in den Wirkbereich der Leuchtquelle und des Lesesensors bringt.

## Claims

1. A sensitive charge (1, 11, 21, 31) for a passive dosimeter comprising a plurality of photostimulable flexible screens (3, 13, 23, 33) adapted to be stacked within a dosimeter casing and each comprising a radiosensitive layer of radiophotoluminescent material the reading by illumination of which it is thus possible to defer, the sensitive charge being **characterized by** those screens being attached to a flexible support (2, 12, 22, 32) having two configurations, namely a folded detection configuration, in which the screens are stacked on each other and an unfolded reading configuration, in which those screens are disposed side by side on the same face of the support.

2. A sensitive charge according to claim 1, wherein the screens are disposed with two folds (5, 15, 25, 35) between the successive screens, whereby, in folded configuration, the screens are all disposed oriented in the same direction.

3. A sensitive charge according to claim 1 or claim 2, comprising 5 to 20 photostimulable screens.

4. A sensitive charge according to any one of claims 1 to 3, wherein the foldable support onto which the screens are fastened is a straight strip of rectangular general shape (2, 12, 22), with parallel fold lines (5, 15, 25).

5. A sensitive charge according to any one of claims 1 to 3, wherein the foldable support onto which the screens are fastened is a circle arc (32), with fold lines (35) passing through the center of that circle arc.

6. A sensitive charge according to any one of claims 4 or 5, wherein the fold lines are equidistant.

7. A sensitive charge according to any one of claims 1 to 6, wherein the support is formed of paper of high mechanical strength or a plastics film.

8. A sensitive charge according to any one of claims 1 to 7, of which the screens are formed from europium-doped barium fluoro-halide.

9. A sensitive charge according to any one of claims 1 to 8, of which the support furthermore bears intensifying/absorption interleaving sheets (4, 14, 24) attached to the support, alternating with the photostimulable screens, the screens being separated by two folds from each other, in the same way as the interleaving sheets are separated by two folds from each other.

10. A sensitive charge according to claim 9, the interleaving sheets of which are produced from a metal material such as tantalum, copper or lead, or from a material chosen from among cadmium, gadolinium or a hydrogenated material.

11. A passive dosimeter comprising at least one sensitive charge according to any one of claims 1 to 8, interleaving sheets with an intensifying/absorbent effect being disposed, in folded configuration of the foldable support, alternately with the photostimulable screens.

12. A passive dosimeter according to claim 11, wherein the interleaving sheets (28) are independent from the foldable support.

13. A passive dosimeter according to claim 12, wherein those interleaving sheets are attached to another support (28).

14. A passive dosimeter according to claim 13, wherein the interleaving sheets are linked to each other by the same lateral side, also so as also to form a comb (28).

15. A method for reading by illumination of a sensitive charge according to any one of claims 1 to 10, comprising a carrier member (53, 63, 73) for the support in unfolded configuration of the sensitive charge, a source of illumination (51, 61, 71), and a reading sensor (52, 62, 72) adapted to sense the response of a screen subjected to the action of the illumination source, the carrier member successively bringing the screens attached to the unfolded support into the zone of action of the source of illumination and of the reading sensor.

Fig. 1

Fig. 2

Fig. 3

Fig. 4

Fig. 5

Fig. 6

Fig. 7

Fig. 8

Fig. 9

Fig. 10

Fig. 11

**Fig. 12**

**Fig. 13**

**Fig. 14**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5083031 A
- US 3582653 A
- US 7420187 B
- WO 2009030833 A

- WO 2010132569 A
- US 2689307 A
- US 5731589 A, Sief
- US 6198108 B

**Littérature non-brevet citée dans la description**

- **DE OLCH et al.** Evaluation of a computed radiography system for megavolt photon beam dosimetry. *Med Phys,* Septembre 2005, vol. 32 (9), 2987-2999
- **DE SHAW et al.** Improvement of signal-to-noise and contrast-to-noise ratios in dual-screen computed radiography. *Med. Phys.,* 1997, vol. 24, 1293-1302
- **DE ABRAHAM et al.** La mesure en détonique ; R&D en radiographie éclair AIRIX. *Chocs n°38 du CEA-DAM,* 2010, 18-28

- **DE OTTO SAUER et al.** Reconstruction of high-energy bremsstrahlung spectra by numerical analysis of depth-dose data. *Radiotherapy and Oncology,* Mai 1990, vol. 18 (1), 39-47
- **DE COLIN R BAKER et al.** Reconstruction of 6 MV photon spectra from measured transmission including maximum energy estimation. *Phys Med Biol,* 1997, vol. 42, 2041-2051
- **DE MARIAN MANCIU et al.** Robust megavoltage X-ray spectra estimation from transmission measurements. *Journal of X-ray Science and Technology,* 2009, vol. 17, 85-99